# FASCICULE DE BREVET EUROPEEN

(11) **EP 3 772 458 B1**
(45) Date de publication et mention de la délivrance du brevet: **22.06.2022**
(21) Numéro de dépôt: 20188811.2
(22) Date de dépôt: 31.07.2020
(51) Int. Cl.: B64C 7/02, B64D 45/00, F02C 7/05, B64D 33/02, B64D 29/00, B64D 33/00

(54) **PARTIE ANTÉRIEURE DE NACELLE D'UN ENSEMBLE PROPULSIF D AÉRONEF COMPORTANT UN BOUCLIER EN AVANT DE SON CADRE DE RIGIDIFICATION**
VORDERER TEIL DER GONDEL EINER FLUGZEUG-ANTRIEBSGRUPPE MIT EINEM SCHUTZSCHILD VOR SEINEN VERSTEIFUNGSRAHMEN
FORWARD SECTION OF NACELLE OF AN AIRCRAFT PROPULSION ASSEMBLY COMPRISING A SHIELD IN FRONT OF ITS STIFFENING FRAME

(30) Priorité: 07.08.2019 FR 1909033
(43) Date de publication de la demande: 10.02.2021
(73) Titulaire: AIRBUS OPERATIONS (S.A.S.), 31060 Toulouse (FR)
(72) Inventeur: PORTE, Alain, 31060 TOULOUSE Cedex 9 (FR); SENTIER, Julien, 31060 TOULOUSE Cedex 9 (FR); BRETON, Clément, 31060 TOULOUSE Cedex 9 (FR)
(74) Mandataire: Gicquel, Olivier Yves Gérard

(56) Documents cités:
- EP-A1- 3 501 991
- FR-A1- 2 966 126
- US-A- 3 371 471
- US-A1- 2017 233 090
- US-A1- 2019 195 085
- US-B2- 9 874 228

## Description

La présente invention concerne le domaine des ensembles propulsifs d'aéronef et plus particulièrement les nacelles des ensembles propulsifs d'aéronef.

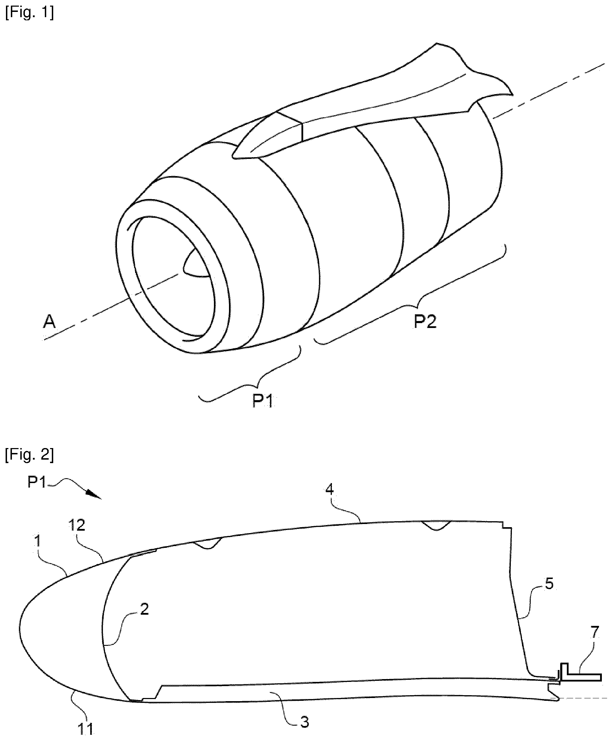

Un ensemble propulsif est un dispositif permettant de générer une poussée, qui constitue la force motrice de l'aéronef équipé de l'ensemble propulsif. Un ensemble propulsif d'aéronef est représenté à titre d'exemple à la figure 1.

La nacelle comporte classiquement une partie antérieure P1 formant entrée d'air.

La partie antérieure P1 a pour rôle de capter l'air de façon à assurer un écoulement régulier vers la soufflante.

La nacelle comporte par ailleurs une partie principale P2, constituant le reste de ladite nacelle.

L'ensemble propulsif s'étend autour d'un axe appelé par la suite axe longitudinal A. Une structure classique de partie antérieure de nacelle d'ensemble propulsif d'aéronef, telle que connue dans l'état de la technique, est décrite en référence à la figure 2.

La partie antérieure P1 de la nacelle comprend une lèvre d'entrée d'air 1, pouvant être annulaire ou sensiblement annulaire et qui est disposée à son extrémité avant.

Dans l'ensemble du présent document, les notions d'« avant » et d'« arrière », d'« antérieur » et de « postérieur » ainsi que d'« amont » et d'« aval » se comprennent selon la direction du flux d'air dans l'ensemble propulsif. Ainsi, l'air rentre par l'avant de l'ensemble propulsif, c'est-à-dire par la partie antérieure P1 de la nacelle et ressort (après qu'une partie de l'air a servi en tant que comburant) par l'arrière de l'ensemble propulsif, c'est-à-dire par l'extrémité arrière de la partie principale P2.

Dans la structure classique d'une partie antérieure P1 de l'ensemble propulsif, un cadre avant 2 est disposé à l'arrière de la lèvre d'entrée d'air 1. Le cadre avant définit notamment un conduit de dégivrage permettant d'empêcher la formation de givre sur le bord d'attaque de la lèvre d'entrée d'air, par circulation d'air chaud dans le conduit de dégivrage.

Une structure interne 3 comportant un panneau insonorisant, prolonge vers l'arrière d'une surface intérieure 11 la lèvre d'entrée d'air 1.

Un panneau externe 4 prolonge vers l'arrière une surface externe 12 de la lèvre d'entrée d'air 1.

Un cadre de rigidification 5, également appelé cadre arrière est par ailleurs disposé à

une extrémité arrière de la partie antérieure P1 de nacelle et relie le panneau externe 4 à la structure interne 3.

Le cadre de rigidification 5 définit ainsi la limite entre la partie antérieure P1 et la partie principale P2 de la nacelle. Le cadre de rigidification rigidifie la structure, et confère à la nacelle une résistance importante, nécessaire en cas de survenue d'une rupture de pâle de la soufflante du groupe propulsif. Le cadre de rigidification 5 peut également constituer une cloison pare-feu, et supporte la majorité des interfaces de l'entrée d'air avec la nacelle et le moteur du groupe propulsif.

L'axe longitudinal A peut être confondu avec un axe de révolution du cadre avant 2 ou du cadre de rigidification 5.

Une bride 7, à savoir une bride moteur, représentée à la figure 2 bien que ne faisant pas partie de la partie antérieure P1 de la nacelle, permet de lier le cadre de rigidification 5 au moteur du groupe propulsif, c'est-à-dire à l'ensemble comportant la soufflante et la turbomachine, et en particulier de lier la partie antérieure P1 de la nacelle à un compartiment de soufflante.

Généralement, le cadre avant 2 est disposé selon une direction perpendiculaire à l'axe longitudinal de l'ensemble propulsif, qui est donc également sensiblement perpendiculaire au flux d'air entrant dans la nacelle.

Le cadre de rigidification 5 peut également être disposé selon une direction perpendiculaire à l'axe longitudinal de l'ensemble propulsif comme divulgué dans le document US2019195085A1, ou présenter une certaine inclinaison comme divulgué dans les documents US2016377090A1, FR2966126A1, EP3501991 A1, US2017233090A1 et FR3075761.

Lors des différentes phases de vol d'un aéronef, des événements impactant l'ensemble propulsif peuvent se produire.

Il arrive par exemple que des oiseaux ou que des objets extérieurs entrent en collision avec l'aéronef et notamment avec l'un de ces ensembles propulsifs. Ces collisions, et notamment les collisions aviaires peuvent endommager les ensembles propulsifs. Dans l'état de la technique, en cas de collision d'un oiseau ou d'un objet avec la nacelle de l'ensemble propulsif, la structure précédemment décrite subit cette collision. La structure est dimensionnée, en tenant compte de ce type d'événement, pour encaisser des impacts importants. Lors d'un impact, par exemple celui d'une collision aviaire au niveau de la lèvre d'entrée d'air 1 de la nacelle N, l'oiseau heurte ensuite le cadre avant 2, qui doit reprendre et absorber dans la mesure du possible la partie restante de l'énergie de cet impact, qui peut représenter la majorité de l'énergie de l'impact. Dans certains cas d'impacts particulièrement importants, le cadre avant peut être traversé et/ou une part de l'énergie de l'impact peut également être transmise jusqu'au cadre de rigidification 5. Une inclinaison du cadre de rigidification 5 peut permettre de limiter l'énergie à absorber en déviant l'objet impactant de sa trajectoire initiale, mais elle limite (à dimensionnement égal) l'efficacité du cadre de rigidification pour ce qui concerne la rigidification de la structure de la nacelle et la protection vis-à-vis des ruptures de pales.

Ainsi, le cadre avant 2 et le cadre de rigidification 5 sont ainsi dimensionnés pour absorber une énergie importante. Un tel dimensionnement a des conséquences négatives sur le poids et le coût de fabrication des cadres.

La présente invention a pour but de proposer une configuration de partie antérieure de nacelle de groupe propulsif d'aéronef permettant de résoudre au moins l'un des inconvénients précités, et en particulier d'améliorer la tenue aux impacts d'objets extérieurs tels qu'un oiseau, et ce indépendamment de la configuration du cadre de rigidification.

Ainsi, l'invention porte sur une partie antérieure de nacelle d'un ensemble propulsif d'aéronef, ladite partie antérieure ayant une extrémité avant permettant l'entrée d'air et une extrémité arrière, ladite partie antérieure comportant :
- une lèvre d'entrée d'air disposée à ladite extrémité avant,
- une structure interne prolongeant une surface intérieure de la lèvre d'entrée d'air,
- un panneau externe prolongeant une surface extérieure de la lèvre d'entrée d'air,
- un cadre de rigidification annulaire autour d'un axe longitudinal d'extension de la nacelle, ledit cadre de rigidification étant disposé à ladite extrémité arrière de ladite partie antérieure, ledit cadre de rigidification comprenant un bord périphérique externe lié audit panneau externe,

Cette partie antérieure de nacelle comporte en outre un bouclier annulaire, positionné en avant du cadre de rigidification et reliant un bord périphérique interne du cadre de rigidification à ladite structure interne. Le bouclier comporte une portion s'étendant vers le panneau externe au-delà du bord périphérique interne du cadre de rigidification, ladite portion formant un angle non nul vis-à-vis dudit cadre de rigidification de sorte à ménager un espace libre vis-à-vis dudit cadre de rigidification à l'arrière de ladite portion permettant la déformation dudit bouclier lors d'un impact d'un objet extérieur entrant par la lèvre d'entrée d'air et percutant ledit bouclier, de sorte à absorber tout ou partie de l'énergie de l'impact.

La présence d'un bouclier en avant du cadre de rigidification permet de protéger ledit cadre de rigidification, et plus généralement les éléments situés en arrière du bouclier, en cas d'impact avec un objet extérieur à la nacelle, par exemple en cas de choc aviaire. Cela permet notamment de modifier la répartition des fonctions dans la nacelle, le cadre de rigidification n'ayant plus de fonction d'absorption de l'énergie d'un tel impact. Le cadre de rigidification a de fait essentiellement un rôle structurel et d'interface. De même, le cadre avant, devenu optionnel, peut n'avoir qu'un rôle de cloisonnement pour le conduit de dégivrage.

Cela permet au final une constitution plus légère du cadre de rigidification et le cas échéant du cadre avant, et l'adoption de la configuration souhaitée en termes de position et d'inclinaison des cadres, indépendamment de la problématique de résistance aux impacts d'objets extérieurs.

La partie antérieure de nacelle peut comporter en outre un cadre avant fermant un conduit de dégivrage de la lèvre d'entrée d'air.

Le cadre de rigidification peut être incliné, vis-à-vis d'un plan orthogonal à l'axe longitudinal, d'un angle β compris entre 15° ledit cadre de rigidification étant incliné en direction de l'avant de la partie antérieure de nacelle, et 80° ledit cadre de rigidification étant incliné vers l'arrière de la partie antérieure de nacelle.

Le bouclier peut comporter une portion s'étendant vers le panneau externe au-delà du bord périphérique interne du cadre de rigidification, ladite portion formant un angle non nul vis-à-vis dudit cadre de rigidification de sorte à ménager ledit espace vis-à-vis dudit cadre de rigidification.

Le bouclier peut présenter une forme concave orientée vers l'avant de la partie antérieure de nacelle.

Le bouclier peut présenter une section sensiblement en I, en L, ou en C.

Le bouclier peut présenter une section fermée ménageant ledit espace libre dans ledit bouclier, par exemple une section sensiblement en O, en D, ou en g.

Le bouclier peut être métallique, et présenter en section des branches d'épaisseur comprise entre 1mm et 3mm.

Un élément déformable peut être interposé entre le bouclier et le cadre de rigidification. Une bride d'une partie principale de nacelle peut en outre être liée au bouclier, et un élément déformable peut être interposé entre ledit bouclier et ladite bride.

Un élément déformable extérieur peut être interposé entre le cadre de rigidification et le panneau externe.

L'invention porte également sur une nacelle d'un groupe propulsif d'aéronef comportant une partie antérieure telle que précédemment décrite. L'invention porte enfin sur un aéronef comportant un groupe propulsif comportant une telle nacelle. D'autres particularités et avantages de l'invention apparaîtront encore dans la description ci-après.

Aux dessins annexés, donnés à titre d'exemples non limitatifs :
[Fig. 1] la figure 1 représente selon une vue schématique en trois dimensions un ensemble propulsif d'aéronef ;
[Fig. 2] la figure 2 représente, selon une vue de principe en coupe une partie antérieure de nacelle d'ensemble propulsif d'aéronef conforme à l'art antérieur ;
[Fig. 3] la figure 3 représente, selon une vue analogue à celle de la figure 2, une partie antérieure de nacelle d'ensemble propulsif d'aéronef conforme à un premier mode de réalisation de l'invention ;
[Fig. 4] la figure 4 représente, selon une vue analogue à celle des figures 2 et 3, la partie antérieure de nacelle de la figure 3 suite à un impact avec un objet extérieur ;
[Fig. 5] la figure 5 représente, selon une vue en coupe schématique, la section respective de quatre variantes de boucliers pouvant être mis en œuvre dans des modes de réalisation de l'invention ;
[Fig. 6] la figure 6 représente, selon une vue analogue à celle des figures 2 à 4, une partie antérieure de nacelle d'ensemble propulsif d'aéronef conforme à un second mode de réalisation de l'invention ;
[Fig. 7] la figure 7 représente, selon une vue analogue à celle de la figure 6, une partie antérieure de nacelle d'ensemble propulsif d'aéronef conforme à un troisième mode de réalisation de l'invention ;
[Fig. 8] la figure 8 représente, selon une vue analogue à celle de la figure 7, une variante du troisième mode de réalisation de l'invention représenté à la figure 7 ;
[Fig. 9] la figure 9 représente, selon une vue de détail en coupe, un exemple de liaison entre un bouclier, un cadre de rigidification et une bride pouvant être mis en œuvre dans l'invention.
[Fig. 10] la figure 10 représente, selon une en coupe, un aspect d'un exemple de liaison entre un bouclier, un cadre de rigidification et une bride pouvant être mis en œuvre dans l'invention.

Les figures 1 et 2, présentant respectivement des généralités sur les ensembles propulsifs d'aéronef et une configuration de partie antérieure de nacelle conforme à l'état de la technique ont été décrites ci-avant en préambule du présent document.

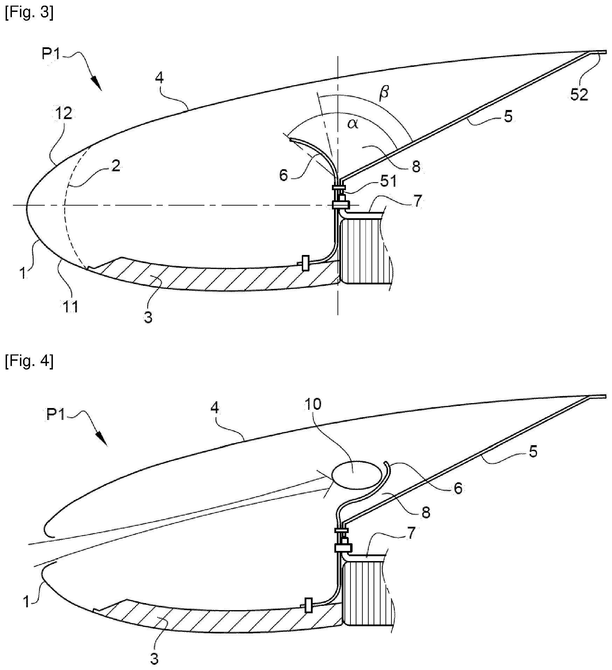

La figure 3 représente, selon une vue analogue à celle de la figure 2, une partie antérieure de nacelle conforme à un premier mode de réalisation de l'invention. Plus précisément, la figure 3 ne représente qu'une section partielle de cette structure annulaire.

La configuration présentée est notamment applicable à une partie antérieure de nacelle de moteur de type UHBR. Un moteur UHBR présente un taux de dilution important (ratio massique entre le flux secondaire et le flux primaire). Un tel moteur présente une nacelle de grande dimension, en particulier de plus grand diamètre que les diamètres des ensembles propulsifs employés à ce jour sur les aéronefs commerciaux.

La partie antérieure P1 de nacelle d'ensemble propulsif d'aéronef représentée à la figure 3 comporte une lèvre d'entrée d'air 1, qui définit le bord d'attaque de la partie antérieure P1 de nacelle, et donc le bord d'attaque du carénage aérodynamique formé par la nacelle une fois celle-ci constituée avec ladite partie antérieure P1.

La lèvre d'entrée d'air 1 forme l'extrémité avant de la partie antérieure P1 de nacelle. Elle présente une forme fermée, sensiblement annulaire, mais n'est pas nécessairement parfaitement circulaire (de révolution).

Selon le mode de réalisation décrit, la lèvre d'entrée d'air 1 présente une surface intérieure 11 et une surface extérieure 12.

La surface intérieure 11 de la lèvre d'entrée d'air 1 est prolongée par une structure interne 3. La structure interne 3 comporte en particulier un panneau qui forme la surface aérodynamique interne de la partie antérieure P1 de nacelle, canalisant le flux d'air entrant dans la nacelle. La structure interne 3 peut avoir un rôle acoustique important, afin de limiter le bruit émis par l'ensemble propulsif. La structure interne 3 peut en particulier comporter un panneau insonorisant, connu dans l'état de la technique, ayant une configuration permettant d'éviter la transmission des ondes acoustiques ou d'en favoriser l'absorption.

La surface extérieure 12 de la lèvre d'entrée d'air 1 est prolongée par un panneau externe 4. Bien qu'il s'agisse généralement de pièces distinctes, dans certains modes de réalisation, la lèvre d'entrée d'air 1 et le panneau extérieur 4 peuvent être formés de manière monobloc. De même, la lèvre d'entrée d'air 1 et la structure interne 3 peuvent être monobloc. Le panneau externe 4 forme la surface aérodynamique extérieure de la partie antérieure P1 de nacelle. Lorsque la nacelle est constituée, le panneau externe 4 est lui-même prolongé au niveau de la partie principale P2 afin de former la surface aérodynamique externe de la nacelle, qui est notamment configurée pour limiter la trainée aérodynamique.

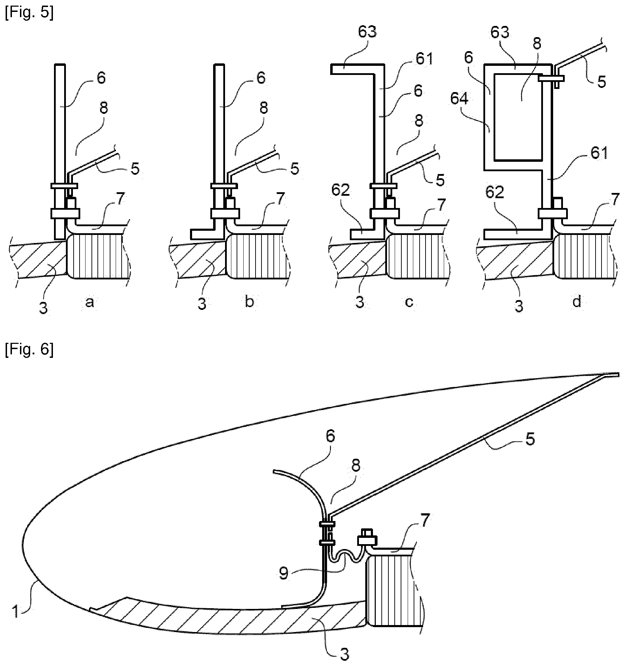

Le cadre avant 2 est représenté par un trait en pointillé à la figure 3 dans la mesure où le cadre avant est optionnel dans l'invention. En effet, le cadre avant n'a plus nécessairement besoin de remplir la fonction d'absorption de l'énergie d'un impact avec un objet extérieur à la nacelle, comme c'est le cas dans l'état de la technique. En particulier, le cadre avant 2 peut avoir dans certains modes de réalisation de l'invention une simple fonction de cloisonnement du conduit de dégivrage (souvent désigné par l'expression anglophone « D-duct » faisant référence à la section en D de ce conduit). Bien que seulement représenté à la figure 3, un cadre avant peut être prévu dans tous les modes de réalisation de l'invention, et en particulier dans les modes de réalisation décrits ci-après en référence aux figures 6 à 8. La suppression du cadre avant 2 peut limiter la traînée générée par la nacelle, dans la mesure où les liaisons réalisées entre ledit cadre avant 2 et les parois de la nacelle sont source d'irrégularités géométriques locales pouvant créer une trainée supplémentaire. En outre, le cadre avant n'étant pas fonctionnellement nécessaire lorsqu'un système de dégivrage électrique équipe la lèvre d'entrée d'air, sa suppression permet un gain de poids.

La partie antérieure P1 comporte un cadre de rigidification 5 disposé à l'extrémité arrière de la partie antérieure P1.

Le cadre de rigidification constitue un élément structurel important de la partie antérieure de nacelle.

Le cadre de rigidification 5 a, de manière connue, de nombreuses fonctions, liées à la résistance mécanique de ladite partie antérieure de nacelle. Le cadre arrière 5 peut être métallique, réalisé en matériau composite, ou en matériau hybride composite/métallique.

En particulier, le cadre de rigidification 5 est destiné à être lié, directement ou via d'autres éléments, au moteur de l'ensemble propulsif. Par moteur, on entend de façon générale les moyens de propulsion qui sont compris dans la nacelle une fois celle-ci constituée. Le moteur comprend généralement une turbomachine et une soufflante entrainée par la turbomachine. Le cadre de rigidification 5 peut en particulier être lié à un compartiment de soufflante, c'est-à-dire à un carter de la soufflante.

Le cadre de rigidification 5 a un rôle de liaison entre les parois de la partie antérieure de nacelle, c'est-à-dire de liaison entre le panneau externe 4 et la structure interne 3. Le cadre de rigidification 5, qui est de forme annulaire autour de l'axe longitudinal d'extension de la nacelle, comprend en particulier un bord périphérique externe 52 lié au panneau externe 4. Le cadre de rigidification 5 comprend également un bord périphérique interne 51, qui est indirectement lié dans l'invention, comme décrit ci-après, à la structure interne 3.

La structure de la partie antérieure P1 de la figure 3, correspondant à un exemple de mode de réalisation de l'invention, se distingue en particulier de la structure connue dans l'état de la technique et décrite en référence à la figure 2, en ce qu'elle comporte un bouclier 6. Le bouclier 6 est un élément formé en une ou plusieurs parties (par exemple plusieurs secteurs aboutés) qui est lié au cadre de rigidification 5 en avant de ce dernier. Le bouclier 6 a une première fonction de liaison entre le bord périphérique interne 51 du cadre de rigidification et la structure interne 3.

Sur une portion du bouclier 6, un espace libre 8 est ménagé à l'arrière dudit bouclier de sorte à permettre sa déformation sans que le cadre de rigidification 5 ne soit lui-même directement ou presque directement impacté et déformé.

Divers arrangements du cadre de rigidification 5 et du bouclier 6 permettent l'obtention d'une telle configuration et notamment la formation d'un espace libre 8 à l'arrière d'une portion du bouclier 6.

Ainsi, le cadre de rigidification 5 peut être « droit », c'est-à-dire sensiblement orthogonal à l'axe longitudinal A, ou être incliné, légèrement vers l'avant de la nacelle ou, légèrement ou fortement vers l'arrière de la nacelle. Une inclinaison vers l'avant correspond à une inclinaison selon laquelle un bord extérieur du bouclier est plus en avant que son bord intérieur, c'est-à-dire que son bord qui est lié à la structure interne 3. Une inclinaison vers l'arrière correspond à une inclinaison selon laquelle un bord extérieur du bouclier est plus en arrière que son bord intérieur, c'est-à-dire que son bord qui est lié à la structure interne 3. En particulier, le cadre de rigidification 5 peut être incliné, vis-à-vis d'un plan orthogonal à l'axe longitudinal (A), d'un angle β compris entre 15°, ledit cadre de rigidification étant incliné en direction de l'avant de la partie antérieure de nacelle, et 80°, ledit cadre de rigidification étant incliné vers l'avant de la partie antérieure de nacelle.

Une telle inclinaison du cadre de rigidification 5 permet la formation d'un bouclier 6 comportant une portion s'étendant en direction du panneau externe 4, en formant un angle α (non nul) vis-à-vis dudit cadre de rigidification 5. Le bouclier 6 s'écarte ainsi du cadre de rigidification 5, ce qui forme l'espace libre 8. Cette configuration s'applique tant à un bouclier dont la section est formée de segments droits qu'à un bouclier de section courbe, arrondie, comme représenté à la figure 3, l'angle α étant considéré pour la direction formée par le bouclier entre le point où le bouclier 6 se décolle du cadre de rigidification 5 jusqu'à l'extrémité dudit bouclier 5.

Dans l'exemple de mode de réalisation de la figure 3, le bouclier présente une forme concave orientée vers l'avant de la partie antérieure de nacelle.

La liaison de la partie antérieure P1 de nacelle avec le moteur est assurée via une bride 7. La bride 7 représentée à la figure 3 peut correspondre, selon diverses configurations possibles, à la bride moteur ou à une bride intermédiaire interposée entre le bouclier 6 et la bride moteur qui est fixée au moteur de l'ensemble propulsif Lorsque la nacelle équipant un aéronef rencontre un objet extérieur 10, l'objet extérieur 10 peut traverser la lèvre d'entrée d'air et pénétrer dans la partie antérieure de nacelle P1, comme cela est représenté de manière schématique à la figure 4 par une flèche illustrant la trajectoire de l'objet extérieur 10.

Lorsque l'objet extérieur 10 percute le bouclier 5, ce dernier peut se déformer dans l'espace libre 8. La déformation du bouclier 5 absorbe l'énergie de l'impact avec l'objet extérieur 10. L'intégrité du cadre de rigidification 5 est préservée. Plus généralement, le cadre de rigidification 5 n'est pas mis en œuvre dans l'absorption de l'énergie de l'impact avec un objet extérieur 10, ou est mis en œuvre pour l'absorption d'une énergie limitée, une partie de l'énergie de l'impact ayant été absorbée par le bouclier 5. La figure 5 représente, selon une vue en coupe schématique, la section respective de quatre variantes de boucliers pouvant être mis en œuvre dans des modes de réalisation de l'invention. En particulier, les quatre variantes alternatives représentées à la figure 5 sont respectivement référencées a, b, c et d.

La variante représentée à la figure 5 sous la référence (a) comporte un bouclier 6 droit, c'est-à-dire ayant une section en I et s'étendant dans un plan orthogonal à l'axe longitudinal A. Le cadre de rigidification 5 est incliné vers l'arrière de la nacelle (c'est-à-dire que son bord périphérique interne 51 est plus en avant que son bord périphérique externe 52, de sorte à ménager l'espace libre 8 permettant la déformation du bouclier 6 en cas d'impact.

La variante représentée à la figure 5 sous la référence (b) se distingue de la variante sous référence (a) par un bouclier 6 ayant une section en L, c'est-à-dire à deux branches orthogonales entre elles. Ainsi, le bouclier 6 peut présenter une meilleure stabilité vis-à-vis de la structure interne 3, à laquelle il peut être lié.

La variante représentée à la figure 5 sous la référence (c) se distingue de la variante sous référence (b) par un bouclier 6 ayant une section en C, formé de trois branches à savoir une branche principale 61 et deux branches orthogonales 62, 63 à ladite branche principale. La concavité du bouclier 6 est orientée vers l'avant de la partie antérieure de nacelle. Plus précisément, une branche orthogonale extérieure 63 permet, en cas d'impact d'un objet extérieur avec le bouclier, d'augmenter l'efficacité du bouclier à absorber par déformation l'énergie de l'impact.

Bien évidemment, une variante non représentée comportant une branche principale 61 et une branche orthogonale extérieure 63, mais pas de branche orthogonale intérieure 62 en appui sur la structure interne 3 est envisageable.

La variante représentée à la figure 5 sous la référence (d) illustre deux aspects, à savoir la formation de l'espace libre 8 par l'adaptation d'une section de bouclier 6 creuse, et la fixation du cadre de rigidification 5 en partie extérieure du bouclier 6. Concernant la formation de l'espace libre 8, le bouclier présente dans l'exemple ici représenté une section en g, comportant une branche principale 61, une branche orthogonale intérieure 62, une branche orthogonale extérieure 63, et une branche avant 64 à l'arrière de laquelle est ainsi formé l'espace libre 8. Lors d'un impact avec un objet extérieur, c'est cette branche avant 64 qui est impactée, et c'est donc cette branche extérieure 64 qui constitue une portion du bouclier à l'arrière de laquelle est formé l'espace libre. La déformation du bouclier 6 s'effectue ainsi par déformation de la branche avant 64 et/ou par son rapprochement de la branche principale 61.

Selon ce principe, de nombreuses autres sections de bouclier sont envisageables, à savoir toute section creuse, fermée, ainsi que certaines sections ouvertes (par exemple en y) présentant une branche du bouclier en avant de sa branche principale.

Ainsi, un espace libre est formé par le bouclier entre la branche avant 64 (qui peut être droite ou courbe) et le cadre de rigidification 5, qui est pour sa part lié à l'arrière de la branche principale 61.

L'emploi d'un tel bouclier permet également de positionner la liaison entre ledit bouclier 6 et le cadre de rigidification 5 à la position radiale souhaitée. En effet, le bouclier formant lui-même l'espace libre nécessaire à sa déformation, il n'est pas nécessaire de lier le cadre de rigidification sur le bouclier au plus près de l'axe longitudinal A afin de créer un espace libre entre le bouclier 6 et le cadre de rigidification 5 en formant un angle entre eux.

Dans tous les modes de réalisation du bouclier 6, ce dernier peut être métallique, par exemple en aluminium, alliage d'aluminium ou en titane. L'épaisseur du bouclier peut par exemple être de l'ordre de 1mm à 2mm, par exemple 1,5mm environ.

De manière générale, le bouclier 6 peut être lié à la structure interne 3, à la bride 7 et au cadre de rigidification par des liaisons distinctes qui facilitent au besoin le démontage de la partie antérieure de la nacelle. A contrario, la liaison entre le bouclier 6, le cadre de rigidification 5 et la bride 7 peut être une liaison commune.

La figure 6 représente un mode de réalisation de l'invention dans lequel un élément déformable 9, dit « amortisseur », est positionné entre le bouclier 6 et la bride 7 (bride moteur ou bride intermédiaire à laquelle est liée la bride moteur).

L'élément déformable 9 est une pièce annulaire, ou un ensemble discret de pièces réparties de manière annulaire entre le bouclier et la bride 7, qui est apte à se déformer en particulier dans la direction longitudinale en cas d'impact violent sur le bouclier afin de protéger la bride 7 des effets de l'impact. Cela permet de limiter de manière fiable les conséquences de l'impact à la seule partie antérieure P1 de la nacelle.

L'élément déformable peut prendre des formes multiples. Dans l'exemple ici représenté, l'élément déformable 9 présente une section ondulée, sensiblement en W, qui est programmée pour être déformée sous l'effet d'un impact à forte composante longitudinale.

Alternativement, l'élément déformable (ou chaque pièce discrète de l'élément déformable) peut présenter une section fermée creuse, par exemple circulaire, elliptique ou ovale, le cas échéant aplatie au niveau des interfaces avec le bouclier 5 et la bride 7.

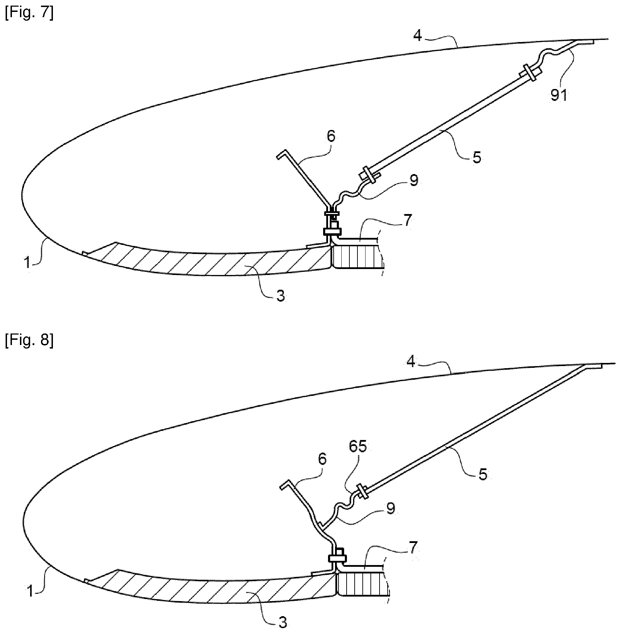

L'élément déformable 9 permet une absorption de l'énergie de l'impact par déformation plastique. L'élément déformable 9 peut comporter un élément élastique, par exemple un élément élastomère lui conférant des propriétés amortissantes à proprement parler. La figure 7 présente un mode de réalisation de l'invention dans lequel un élément déformable 9 est interposé entre le bouclier 6 et le cadre de rigidification 5. Ce qui a été décrit ci-avant relativement à un élément déformable interposé entre le bouclier 6 et la bride 7 est applicable à cet élément déformable interposé entre le bouclier 6 et le cadre de rigidification 5. Il peut ainsi être annulaire ou discret, et présenter diverses sections permettant sa déformation longitudinale et/ou dans le plan d'extension du cadre de rigidification 5. De même, il peut comporter un élément élastique lui conférant des propriétés amortissantes.

Le mode de réalisation de la figure 7 présente également un élément déformable extérieur 91 interposé entre le cadre de rigidification 5 et le panneau externe 4. Ce qui a été décrit ci-avant relativement à un élément déformable 9 interposé entre le bouclier 6 et la bride 7 ou entre le bouclier et le cadre de rigidification 5 est applicable à cet élément déformable extérieur 91.

Il peut ainsi être annulaire ou discret, et présenter diverses sections permettant sa déformation longitudinale et/ou dans le plan d'extension du cadre de rigidification 5. De même, il peut comporter un élément élastique lui conférant des propriétés amortissantes. Bien que représenté avec le mode de réalisation de la figure 7, l'élément déformable extérieur 91 peut être optionnellement utilisé dans tous les modes de réalisation de l'invention. De même, un mode de réalisation de l'invention comportant un élément déformable 9 interposé entre le bouclier 6 et le cadre de rigidification 5 peut être dénué d'élément déformable extérieur 91 (la liaison entre le cadre de rigidification 5 et le panneau extérieur 4 étant réalisée par exemple tel que représenté pour le mode de réalisation de la figure 6).

La figure 8 représente un mode de réalisation dans lequel l'élément déformable 9 est formé intégralement avec le bouclier 6. Ainsi, le bouclier 6 comporte dans ce mode de réalisation, vu en section, une branche déformable 65.

Que l'élément déformable soit formé d'une pièce séparée ou qu'il soit formé de manière monobloc avec le bouclier 6, la liaison entre l'élément déformable 9 et le cadre de rigidification 5, peut être réalisée par la face interne ou la face externe du cadre de rigidification.

Dans le cas d'un élément 9 interposé entre le bouclier et le cadre, qu'il soit formé d'une pièce séparée ou de manière monobloc avec le bouclier, la portion du bouclier s'étendant vers la partie externe s'étend au-delà du bord périphérique interne de l'élément déformable 9, ce bord périphérique étant considéré comme le bord périphérique interne du cadre (puisque l'élément 9 prolonge le cadre jusqu'au bouclier) lorsqu'on exprime le fait que la partie externe s'étend au-delà du bord périphérique interne du cadre.

En outre, les modes de réalisation des figures 7 et 8 et celui illustré à la figure 6 peuvent être combinés de sorte qu'un premier élément déformable 9 est interposé entre le bouclier 6 et la bride 7, et un deuxième élément déformable 9 est interposé entre le bouclier 6 et le cadre de rigidification 5. Ceci permet de cumuler l'impérative protection de la bride 7 et donc de la partie principale P2 de la nacelle, et une protection accrue du cadre de rigidification 5.

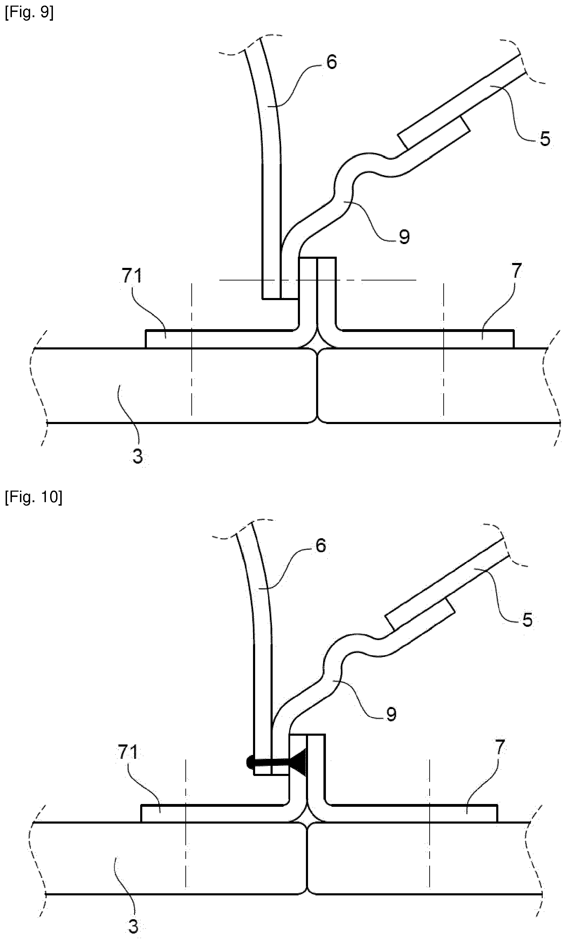

La figure 9 illustre enfin le fait que la liaison entre le bouclier 6, le cadre de rigidification et la bride 7 peut être réalisée selon diverses variantes des modes de réalisation présentés précédemment. Par exemple, selon le mode de réalisation de la figure 9 le bouclier 6 et le cadre de rigidification 5 sont liés à une bride avant 71, elle-même liée à la structure interne 3 et à la bride 7. En l'occurrence, le cadre de rigidification 5 est lié à la bride avant 71 par un élément déformable 9 qui est optionnel.

La liaison entre le bouclier 6, le cadre de rigidification 5 (via le cas échéant l'élément déformable 9) et la bride 7 peut être une liaison commune, qui traverse tous ces éléments. Alternativement, le bouclier 6 et le cadre de rigidification 5 peuvent n'être liés qu'à la bride avant 71 (tel qu'illustré à la figure 10), cette dernière étant liée par une liaison distincte à la bride 7. Par exemple, des liaisons entre le bouclier 6, le cadre de rigidification 5 et la bride avant 71 uniquement peuvent être réalisées le long de la périphérie de ladite bride avant 71 en alternance avec des liaisons avec la bride 7, par exemple des liaisons communes telles que celle illustrée à la figure 9.

L'invention ainsi développée permet ainsi en premier lieu de protéger le cadre de rigidification en cas d'impact de la nacelle avec un objet extérieur. Le cadre de rigidification étant protégé, il n'a plus (ou moins) la fonction de protection contre les impacts d'objet extérieur, notamment les impacts aviaires, à assurer et sa constitution et sa configuration peuvent être revus avec une certaine liberté. Un cadre de rigidification plus léger que dans l'état de la technique connu peut être utilisé. Le cadre avant peut être allégé, voire supprimé.

## Revendications

1. Partie antérieure (P1) de nacelle d'un ensemble propulsif d'aéronef, ladite partie antérieure (P1) ayant une extrémité avant permettant l'entrée d'air et une extrémité arrière, ladite partie antérieure (P1) comportant :
- une lèvre d'entrée d'air (1) disposée à ladite extrémité avant,
- une structure interne (3) prolongeant une surface intérieure (11) de la lèvre (1) d'entrée d'air,
- un panneau externe (4) prolongeant une surface extérieure (12) de la lèvre (1) d'entrée d'air,
- un cadre de rigidification (5) annulaire autour d'un axe longitudinal (A) d'extension de la nacelle, ledit cadre de rigidification (5) étant disposé à ladite extrémité arrière de ladite partie antérieure (P1), ledit cadre de rigidification (5) comprenant un bord périphérique externe (52) lié audit panneau externe (4),
ladite partie antérieure de nacelle comportant en outre un bouclier (6) annulaire,
positionné en avant du cadre de rigidification (5) et reliant un bord périphérique interne (51) du cadre de rigidification (5) à ladite structure interne (3),
ledit bouclier comportant une portion s'étendant vers le panneau externe (4) au-delà du bord périphérique interne (51) du cadre de rigidification, **caractérisée en ce que** ladite portion forme un angle non nul vis-à-vis dudit cadre de rigidification (5) de sorte à ménager un espace libre (8) vis-à-vis dudit cadre de rigidification (5) à l'arrière de ladite portion permettant la déformation dudit bouclier (6) lors d'un impact d'un objet extérieur (10) entrant par la lèvre d'entrée d'air (1) et percutant ledit bouclier (6), de sorte à absorber tout ou partie de l'énergie de l'impact.

2. Partie antérieure de nacelle selon la revendication 1, comportant en outre un cadre avant (2) fermant un conduit de dégivrage de la lèvre d'entrée d'air (1).

3. Partie antérieure de nacelle selon l'une des revendications 1 ou 2, dans laquelle le cadre de rigidification (5) est incliné, vis-à-vis d'un plan orthogonal à l'axe longitudinal (A), d'un angle β compris entre 15° ledit cadre de rigidification étant incliné en direction de l'avant de la partie antérieure de nacelle, et 80° ledit cadre de rigidification étant incliné vers l'arrière de la partie antérieure (P1) de nacelle.

4. Partie antérieure de nacelle selon l'une des revendications précédentes, dans laquelle le bouclier (6) présente une forme concave orientée vers l'avant de la partie antérieure (P1) de nacelle.

5. Partie antérieure de nacelle selon l'une des revendications 1 à 3, dans laquelle le bouclier (6) présente une section sensiblement en I, en L, ou en C.

6. Partie antérieure de nacelle selon l'une des revendications 1 à 3, dans laquelle le bouclier (6) présente une section fermée ménageant ledit espace libre (8) dans ledit bouclier, par exemple une section sensiblement en O, en D, ou en g.

7. Partie antérieure de nacelle selon l'une des revendications précédentes, dans laquelle le bouclier (6) est métallique, et présente en section des branches d'épaisseur comprise entre 1mm et 3mm.

8. Partie antérieure de nacelle selon l'une des revendications précédentes, dans laquelle un élément déformable (9) est interposé entre le bouclier (6) et le cadre de rigidification (5).

9. Partie antérieure de nacelle selon l'une des revendications précédentes, une bride (7) d'une partie principale (P2) de nacelle étant en outre liée audit bouclier, dans laquelle un élément déformable (9) est interposé entre ledit bouclier (6) et ladite bride (7).

10. Partie antérieure de nacelle selon l'une des revendications précédentes, dans laquelle un élément déformable extérieur (91) est interposé entre le cadre de rigidification (5) et le panneau externe (4).

11. Nacelle d'un groupe propulsif d'aéronef comportant une partie antérieure (P1) selon l'une des revendications précédentes.

12. Aéronef comportant un groupe propulsif comportant une nacelle selon la revendication 11.

## Patentansprüche

1. Vorderer Teil (P1) einer Gondel einer Luftfahrzeugantriebseinheit, wobei der vordere Teil (P1) ein vorderes Ende, das den Eintritt von Luft ermöglicht, und ein hinteres Ende aufweist, wobei der vordere Teil (P1) Folgendes aufweist:
- eine Lufteintrittslippe (1), die am vorderen Ende angeordnet ist,
- eine innere Struktur (3), die eine Innenfläche (11) der Lufteintrittslippe (1) verlängert,
- eine äußere Platte (4), die eine Außenfläche (12) der Lufteintrittslippe (1) verlängert,
- einen ringförmigen Versteifungsrahmen (5) um eine Längserstreckungsachse (A) der Gondel, wobei der Versteifungsrahmen (5) am hinteren Ende des vorderen Teils (P1) angeordnet ist, wobei der Versteifungsrahmen (5) eine äußere Umfangskante (52) umfasst, die mit der äußeren Platte (4) verbunden ist, wobei der vordere Teil der Gondel außerdem einen ringförmigen Schild (6) aufweist, der vor dem Versteifungsrahmen (5) positioniert ist und eine innere Umfangskante (51) des Versteifungsrahmens (5) mit der inneren Struktur (3) verbindet,
wobei der Schild einen Abschnitt aufweist, der sich in Richtung der äußeren Platte (4) über die innere Umfangskante (51) des Versteifungsrahmens hinaus erstreckt,
**dadurch gekennzeichnet, dass** der Abschnitt einen von Null verschiedenen Winkel gegenüber dem Versteifungsrahmen (5) bildet, so dass gegenüber dem Versteifungsrahmen (5) hinter dem Abschnitt ein freier Raum (8) gebildet wird, der die Verformung des Schilds (6) bei einem Aufprall eines durch die Lufteintrittslippe (1) eintretenden und auf das Schild (6) auftreffenden äußeren Objekts (10) ermöglicht, so dass die gesamte Aufprallenergie oder ein Teil davon absorbiert wird.

2. Vorderer Teil einer Gondel nach Anspruch 1, ferner umfassend einen vorderen Rahmen (2), der einen Enteisungskanal der Lufteintrittslippe (1) verschließt.

3. Vorderer Teil einer Gondel nach einem der Ansprüche 1 oder 2, wobei der Versteifungsrahmen (5) gegenüber einer zur Längserstreckungsachse (A) senkrechten Ebene um einen Winkel (β) geneigt ist, der zwischen 15°, wo der Versteifungsrahmen in Richtung der Vorderseite des vorderen Teils der Gondel geneigt ist, und 80°, wo der Versteifungsrahmen in Richtung der Rückseite des vorderen Teils (P1) der Gondel geneigt ist, beträgt.

4. Vorderer Teil einer Gondel nach einem der vorangehenden Ansprüche, wobei der Schild (6) eine konkave Form aufweist, die in Richtung des vorderen Teils (P1) der Gondel gerichtet ist.

5. Vorderer Teil einer Gondel nach einem der Ansprüche 1 bis 3, wobei der Schild (6) einen im Wesentlichen I-, L- oder C-förmigen Querschnitt aufweist.

6. Vorderer Teil einer Gondel nach einem der Ansprüche 1 bis 3, wobei der Schild (6) einen geschlossenen Querschnitt aufweist, der den Freiraum (8) im Schild bildet, beispielsweise einen im Wesentlichen O-, D- oder g-förmigen Querschnitt.

7. Vorderer Teil einer Gondel nach einem der vorangehenden Ansprüche, wobei der Schild (6) aus Metall besteht und im Querschnitt Schenkel mit einer Dicke zwischen 1 mm und 3 mm aufweist.

8. Vorderer Teil einer Gondel nach einem der vorangehenden Ansprüche, wobei zwischen dem Schild (6) und dem Versteifungsrahmen (5) ein verformbares Element (9) angeordnet ist.

9. Vorderer Teil einer Gondel nach einem der vorangehenden Ansprüche, wobei ferner ein Flansch (7) eines Hauptteils (P2) der Gondel mit dem Schild verbunden ist, wobei zwischen dem Schild (6) und dem Flansch (7) ein verformbares Element (9) angeordnet ist.

10. Vorderer Teil einer Gondel nach einem der vorangehenden Ansprüche, wobei zwischen dem Versteifungsrahmen (5) und der äußeren Platte (4) ein äußeres verformbares Element (91) angeordnet ist.

11. Gondel einer Luftfahrzeugantriebseinheit mit einem vorderen Teil (P1) nach einem der vorangehenden Ansprüche.

12. Luftfahrzeug mit einer Antriebseinheit, die eine Gondel nach Anspruch 11 aufweist.

## Claims

1. Anterior part (P1) of a nacelle of an aircraft propulsion system, said anterior part (P1) having a front end allowing air to enter and a rear end, said anterior part (P1) having:
- an air inlet lip (1) disposed at said front end,
- an internal structure (3) extending an interior surface (11) of the air inlet lip (1),
- an external panel (4) extending an exterior surface (12) of the air inlet lip (1),
- a rigidifying frame (5) that is annular about a longitudinal axis (A) of extension of the nacelle, said rigidifying frame (5) being disposed at said rear end of said anterior part (P1), said rigidifying frame (5) comprising an external peripheral edge (52) connected to said external panel (4),
said anterior part of the nacelle also having an annular shield (6), which is positioned in front of the rigidifying frame (5) and connects an internal peripheral edge (51) of the rigidifying frame (5) to said internal structure (3),
said shield having a portion extending towards the external panel (4) beyond the internal peripheral edge (51) of the rigidifying frame, **characterized in that** said portion forms a non-zero angle with respect to said rigidifying frame (5) so as to form a free space (8) with respect to said rigidifying frame (5) behind said portion, allowing said shield (6) to deform in the event of an impact of a foreign object (10) entering through the air inlet lip (1) and striking said shield (6), so as to absorb all or some of the impact energy.

2. Anterior part of a nacelle according to Claim 1, also having a front frame (2) closing a de-icing duct of the air inlet lip (1).

3. Anterior part of a nacelle according to either of Claims 1 and 2, wherein the rigidifying frame (5) is inclined, with respect to a plane orthogonal to the longitudinal axis (A), at an angle β of between 15°, said rigidifying frame being inclined in the direction of the front of the anterior part of the nacelle, and 80°, said rigidifying frame being inclined towards the rear of the anterior part (P1) of the nacelle.

4. Anterior part of a nacelle according to one of the preceding claims, wherein the shield (6) has a concave shape oriented towards the front of the anterior part (P1) of the nacelle.

5. Anterior part of a nacelle according to one of Claims 1 to 3, wherein the shield (6) has a substantially I-shaped, L-shaped, or C-shaped section.

6. Anterior part of a nacelle according to one of Claims 1 to 3, wherein the shield (6) has a closed section forming said free space (8) in said shield, for example a substantially O-shaped, D-shaped, or g-shaped section.

7. Anterior part of a nacelle according to one of the preceding claims, wherein the shield (6) is metallic and has, in section, branches with a thickness of between 1 mm and 3 mm.

8. Anterior part of a nacelle according to one of the preceding claims, wherein a deformable element (9) is interposed between the shield (6) and the rigidifying frame (5).

9. Anterior part of a nacelle according to one of the preceding claims, a bracket (7) of a main part (P2) of the nacelle also being connected to said shield, wherein a deformable element (9) is interposed between said shield (6) and said bracket (7).

10. Anterior part of a nacelle according to one of the preceding claims, wherein a deformable exterior element (91) is interposed between the rigidifying frame (5) and the external panel (4).

11. Nacelle of an aircraft propulsion unit, having an anterior part (P1) according to one of the preceding claims.

12. Aircraft having a propulsion unit having a nacelle according to Claim 11.
